# EUROPÄISCHE PATENTSCHRIFT

(11) **EP 2 989 381 B1**
(45) Veröffentlichungstag und Bekanntmachung des Hinweises auf die Patenterteilung: **19.08.2020**
(21) Anmeldenummer: 14720565.2
(22) Anmeldetag: 24.04.2014
(51) Int. Cl.: F21V 7/00, F21V 13/02, G02B 5/02, F21V 7/04, F21Y 115/10, F21Y 105/10, F21Y 115/30

(54) **ANORDNUNG ZUR LICHTABGABE MIT EINER LED-LICHTQUELLE UND EINEM REFLEKTOR**
ARRANGEMENT FOR LIGHT OUTPUT COMPRISING AN LED LIGHT SOURCE AND A REFLECTOR
SYSTÈME D'ÉMISSION DE LUMIÈRE COMPRENANT UNE SOURCE LUMINEUSE À LED ET UN RÉFLECTEUR

(30) Priorität: 26.04.2013 DE 202013101815 U
(43) Veröffentlichungstag der Anmeldung: 02.03.2016
(73) Patentinhaber: Zumtobel Lighting GmbH, 6850 Dornbirn (AT)
(72) Erfinder: EBNER, Stephan, A-6850 Dornbirn (AT)
(74) Vertreter: Thun, Clemens
(86) Internationale Anmeldenummer: PCT/EP2014/058363
(87) Internationale Veröffentlichungsnummer: WO 2014/174022

(56) Entgegenhaltungen:
- WO-A1-03/036159
- WO-A1-2012/147653
- CN-U- 201 836 765
- DE-A1-102007 054 206
- DE-A1-102008 007 723
- DE-A1-102010 041 478
- US-A- 6 019 493
- US-A1- 2009 303 711
- US-A1- 2012 113 651

## Beschreibung

Die Erfindung betrifft eine Anordnung zur Lichtabgabe mit einer LED-Lichtquelle (LED: Licht emittierende Diode) und einem Reflektor.

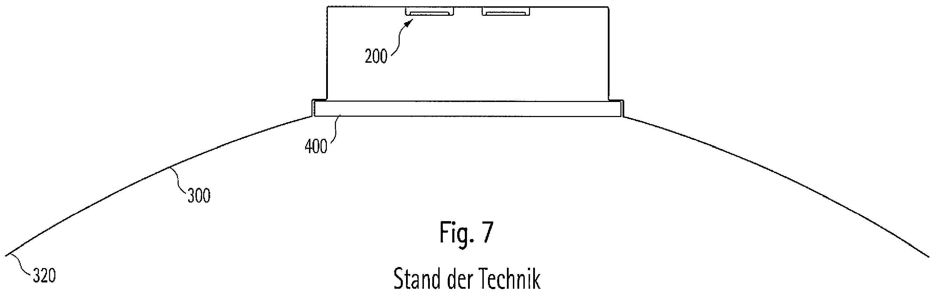

In Fig. 7 ist ein schematischer Querschnitt einer derartigen Anordnung zur Lichtabgabe gezeigt, wie sie aus dem Stand der Technik bekannt ist. Die Anordnung umfasst eine LED-Lichtquelle 200 und einen Reflektor 300 zur Beeinflussung des von der LED-Lichtquelle 200 abgestrahlten Lichts. Das Licht wird schließlich über eine, durch den Reflektor 3 gebildete Öffnung 320 von der Anordnung in den Außenraum abgegeben. Zwischen der LED-Lichtquelle 200 und dem Reflektor 300 ist eine Diffusor-Scheibe 400 angeordnet, die das von der LED-Lichtquelle 200 abgestrahlte Licht diffus zerstreut, so dass die LED-Lichtquelle 200 von außen betrachtet als solche nicht mehr erkennbar ist. Die Diffusor-Scheibe 400 ist dabei sozusagen in einem Bodenbereich des Reflektors 300 angeordnet.

Die LED-Lichtquelle 200 ist an der Bodenwand einer Kammer angeordnet, die durch die Diffusor-Scheibe 400 abgedeckt ist. Diese Kammer wird auch als "Mischkammer" bezeichnet, das sich das Licht der LED-Lichtquelle 200 innerhalb dieser Kammer mischen kann.

Die gezeigte Anordnung ist Teil eines Systems, das aus mehreren derartigen Anordnungen zusammengesetzt ist, so dass es ein LED-Zellenraster bildet. Dieses Zellenraster ist dabei als Bestandteil einer Leuchte vorgesehen.

Die LED-Lichtquelle 200 ist bei dieser Anordnung deutlich außerhalb des von dem Reflektor 300 umschriebenen Raums angeordnet bzw. außerhalb des Bodenbereichs des Reflektors 300, sozusagen tief im Inneren der entsprechenden Leuchte. Aufgrund dieser Gestaltung kommt es dazu, dass ein Teil des Lichts der LED-Lichtquelle 200 nicht den Reflektor 300 erreicht, sondern vorher durch Absorption verloren geht, so dass die Effizienz dieser Anordnung dadurch limitiert ist. Zudem kann bei dieser Anordnung der Reflektor 300 nicht optimal zur Beeinflussung des Lichts genutzt werden.

Aus der US 6,019,493 ist eine Anordnung zur Lichtabgabe bekannt, die eine LED-Lichtquelle, einen Reflektor und ein, sich in die Hauptabstrahlrichtung vorwölbendes optisches Element aufweist. Das optische Element weist dabei Linsenstrukturen auf.

Aus der WO 2012/147653 A1 ist ein optisches Element bekannt, das auf gegenüberliegenden Seiten in unterschiedlichen Richtungen ausgebildete lineare Strukturen aufweist.

Der Erfindung liegt die Aufgabe zugrunde, eine entsprechende verbesserte Anordnung bzw. ein verbessertes System zur Lichtabgabe anzugeben. Insbesondere soll dabei eine verbesserte, effizientere Lichtabgabe ermöglicht sein.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist eine Anordnung zur Lichtabgabe vorgesehen, die eine LED-Lichtquelle zur Erzeugung eines Lichts und Abstrahlung des Lichts in eine Hauptabstrahlrichtung aufweist, einen Reflektor zur optischen Beeinflussung des Lichts, sowie ein optisches Element zur optischen Beeinflussung des Lichts. Das optische Element ist zwischen der LED-Lichtquelle einerseits und dem Reflektor andererseits wirkend angeordnet. Das optische Element ist dabei sich in die Hauptabstrahlrichtung vorwölbend gestaltet und es besteht aus einem lichtdurchlässigen Material.

Dadurch, dass das optische Element im Unterschied zum Stand der Technik, eine nach vorne bzw. in Hauptabstrahlrichtung vorgewölbte Form aufweist, lässt sich auch die LED-Lichtquelle weiter vorne anordnen, wodurch sich in der Folge eine höhere Lichtausbeute der Anordnung und somit ein verbesserter Wirkungsgrad bzw. eine höhere Effizienz erzielen lässt.

Vorzugsweise besteht das optische Element aus einem klaren Material, beispielsweise aus Polymethylmethacrylat (PMMA) oder Polycarbonat (PC). Durch Verwendung eines solchen klaren Materials lässt sich erzielen, dass Lichtverluste bei der Wechselwirkung des Lichts der LED-Lichtquelle mit dem optischen Element besonders gering gehalten werden können.

Vorzugsweise erstreckt sich das optische Element bis zu einer Ebene hin, die normal zu der Hauptabstrahlrichtung orientiert ist und dabei eine lichtabgebende Fläche der LED-Lichtquelle durchsetzt. Hierdurch lässt sich erzielen, dass ein besonders hoher Anteil des Lichts der LED-Lichtquelle auf den Reflektor trifft. Besonders bevorzugt erstreckt sich dabei das optische Element allseits bis zu dieser Ebene. Auf diese Weise lässt sich erzielen, dass das gesamte, von der LED-Lichtquelle in einen Halbraum abgestrahlte Licht auf das optische Element auftrifft und sich somit im weiteren Verlauf nutzen lässt.

Vorzugsweise weist der Reflektor eine reflektierende Fläche auf, die sich zwischen einer Öffnung des Reflektors einerseits und einem Bodenbereich des Reflektors andererseits konvergierend erstreckend gestaltet ist, wobei der Bodenbereich des Reflektors an das optische Element angrenzt. Hierdurch lässt sich erzielen, dass ein besonders geringer Anteil des Lichts auf dem Weg zwischen dem optischen Element und dem Reflektor für die Lichtabstrahlung der Anordnung verloren geht. Das optische Element erstreckt sich auf diese Weise - im Unterschied zum eingangs erwähnten Stand der Technik - nicht außerhalb des Reflektors, sondern innerhalb des von dem Reflektor umschriebenen Raums.

Erfindungsgemäß weist das optische Element einen Oberflächenbereich mit optischen Strukturen auf. Hierdurch lässt sich das Licht besonders gezielt beeinflussen, beispielsweise zumindest großenteils oder auch vollständig auf den Reflektor lenken. Außerdem lässt sich hierdurch erzielen, dass bei Betrachtung des optischen Elements die LED-Lichtquelle als solche nicht mehr erkennbar ist, also sozusagen der durch eine LED der LED-Lichtquelle gebildete "LED-Punkt aufgelöst" ist bzw. - falls die LED-Lichtquelle mehrere LEDs aufweist - die entsprechenden "LED-Punkte aufgelöst" sind.

Vorzugsweise handelt es sich bei den Strukturen um lineare Strukturen und/oder um Prismen-artige Strukturen und/oder um unregelmäßige und/oder um chaotische Strukturen. Diese Strukturen eignen sich besonders gut für eine entsprechende Beeinflussung des Lichts.

Vorzugsweise umfasst dabei der Oberflächenbereich mit den optischen Strukturen einen, der LED-Lichtquelle zugewandten Oberflächenbereich des optischen Elements und/oder einen, der LED-Lichtquelle abgewandten Oberflächenbereich des optischen Elements. Beispielsweise umfassen die Strukturen vorteilhaft lineare Strukturen, die auf dem, der LED-Lichtquelle zugewandten Oberflächenbereich längs einer anderen Richtung ausgestaltet gebildet sind als auf dem, der LED-Lichtquelle abgewandten Oberflächenbereich des optischen Elements. Vorzugsweise sind die Strukturen derart gestaltet, dass bei Betrachtung des optischen Elements entgegen der Hauptabstrahlrichtung eine lichtabgebende Fläche der LED-Lichtquelle nicht mehr als solche lokalisierbar ist. Hierdurch wird eine Blendungswahrscheinlichkeit für einen Betrachter der Anordnung reduziert und eine besonders homogene Lichtabgabe der Anordnung ermöglicht.

Erfindungsgemäß weisen die Strukturen Flankenflächen auf, die sich jeweils in einer Flanken-Ebene erstrecken, die die LED-Lichtquelle durchsetzt oder die sich jeweils längs einer Oberfläche eines Kegels erstrecken, dessen Spitze die LED-Lichtquelle durchsetzt. Hierdurch lässt sich erzielen, dass das Licht bei besonders geringen Verlusten durch das optische Element besonders geeignet auf den Reflektor bzw. dessen reflektierende Fläche gelenkt wird.

Vorzugsweise ist das optische Element besonders geeignet so geformt, dass es in einem Querschnitt betrachtet in erster Näherung eine Trapezform festlegt, wobei die Flankenflächen an den beiden Schenkeln der Trapezform ausgebildet sind.

Vorzugsweise ist die Anordnung derart gestaltet, dass durch das optische Element derjenige Anteil des Lichts, der auf den Reflektor auftrifft, vergrößert ist. Auf diese Weise lässt sich erzielen, dass ein besonders großer Anteil des Lichts auf den Reflektor auftrifft und sich so besonders geeignet durch den Reflektor lenken lässt. Insbesondere lässt sich hierdurch besonders geeignet gezielt Einfluss auf eine Lichtverteilungskurve der Anordnung nehmen, die eine Winkelabhängigkeit der Lichtabgabe der Anordnung charakterisiert.

Vorzugsweise weist der Reflektor einen reflektierenden, strukturierten Oberflächenbereich zur Beeinflussung des Lichts auf. Hierdurch lässt sich vorteilhaft eine besonders gezielte, weitergehende lichtlenkende Beeinflussung des Lichts bewirken.

Gemäß einem weiteren Aspekt der Erfindung ist ein System zur Lichtabgabe vorgesehen, das eine erfindungsgemäße Anordnung zur Lichtabgabe umfasst, sowie wenigstens eine weitere erfindungsgemäße Anordnung zur Lichtabgabe, wobei der Reflektor der zuerst genannten Anordnung zur Lichtabgabe und der entsprechende wenigstens eine weitere Reflektor der wenigstens einen weiteren Anordnung zur Lichtabgabe zusammenhängend, insbesondere einstückig ausgestaltet sind.

Die Erfindung wird im Folgenden anhand eines Ausführungsbeispiels und mit Bezug auf die Zeichnungen näher erläutert. Es zeigen:
- Fig. 1: eine Querschnitt-Skizze zum Prinzip einer erfindungsgemäßen Anordnung zur Lichtabgabe,
- Fig. 2: eine Querschnitt-Skizze zu einem Ausführungsbeispiel,
- Fig. 3: eine weitere, detailliertere Skizze zum Ausführungsbeispiel,
- Fig. 4: eine Skizze zum Strahlengang des Lichts,
- Fig. 5: eine perspektivische Ansicht auf ein System mit mehreren Anordnungen zur Lichtabgabe,
- Fig. 6: eine perspektivische Skizze auf dieses System aus einer anderen Blickrichtung und
- Fig. 7: eine Skizze zu einer entsprechenden Anordnung zur Lichtabgabe gemäß dem Stand der Technik.

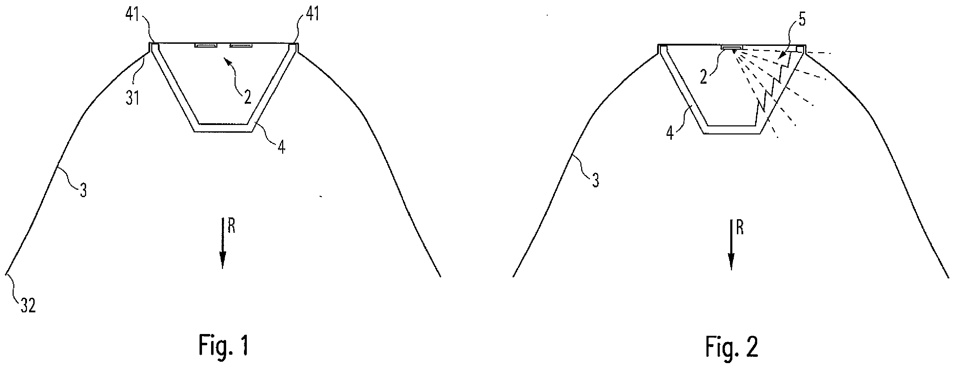

Fig. 1 zeigt eine Querschnitt-Skizze zur Erläuterung des Prinzips einer erfindungsgemäßen Anordnung zur Lichtabgabe. Die Anordnung umfasst eine LED-Lichtquelle 2 zur Erzeugung eines Lichts und Abstrahlung des Lichts in eine Hauptabstrahlrichtung *R.* Die LED-Lichtquelle 2 kann eine LED oder mehrere LEDs aufweisen, beispielsweise, wie in Fig. 1 angedeutet, zwei LEDs. Weiterhin kann die LED-Lichtquelle 2 eine LED-Platine aufweisen, auf der die wenigstens eine LED der LED-Lichtquelle 2 angeordnet ist. Die LED-Platine kann dabei insbesondere eine plane Oberfläche aufweisen, auf der die wenigstens eine LED angeordnet ist.

Bei der Hauptabstrahlrichtung *R* kann es sich insbesondere um eine Richtung handeln, in der die LED-Lichtquelle 2 als solche am meisten Licht abgibt. Selbstverständlich gibt eine LED bzw. eine LED-Lichtquelle typischerweise Licht nicht nur in eine Richtung, sondern in einen Raumwinkel ab, hier also in einen Raumwinkel um die Hauptabstrahlrichtung *R* herum. Insbesondere kann die Gestaltung derart sein, dass sich die Hauptabstrahlrichtung *R* senkrecht zu der Oberfläche der LED-Platine und dabei von Letzterer fortweisend erstreckt.

Weiterhin weist die Anordnung einen Reflektor 3 zur optischen Beeinflussung des Lichts auf.

Weiterhin weist die Anordnung ein optisches Element 4 zur optischen Beeinflussung des Lichts auf, wobei das optische Element 4 zwischen der LED-Lichtquelle 2 einerseits und dem Reflektor 3 andererseits wirkend angeordnet ist.

Das optische Element 4 ist dabei so gestaltet, dass es sich in die Hauptabstrahlrichtung R vorwölbt; dabei besteht es aus einem lichtdurchlässigen Material. Durch die vorgewölbte Form des optischen Elements 4 lässt sich erzielen, dass ein besonders großer Anteil des Lichts, das von der LED-Lichtquelle 2 abgestrahlt wird, auf den Reflektor 3 trifft. Hierdurch lässt sich ein besonders guter Wirkungsgrad für die Anordnung erzielen.

Vorzugsweise besteht das optische Element 4 aus einem klaren, insbesondere glasklaren Material. Auf diese Weise wird erzielt, dass besonders viel Licht das optische Element 4 durchsetzen kann und besonders wenig durch Absorption verloren geht. Insbesondere lässt sich auf diese Weise im Vergleich zum eingangs erwähnten Stand der Technik eine Reduzierung der Rückreflexionsrate erzielen; es lässt sich also somit die Gesamteffizienz der Anordnung erhöhen.

Beispielsweise eignet sich als Material für das optische Element 4 besonders PMMA oder PC. Diese beiden Materialien haben einen entsprechend geeigneten, hohen Transmissionsgrad für Licht.

Der Reflektor 3 weist vorzugsweise eine reflektierende Fläche auf, die sich zwischen einer Öffnung 32 des Reflektors 3 einerseits und einem Bodenbereich 31 des Reflektors 3 andererseits konvergierend erstreckend gestaltet ist. Dabei ist die Gestaltung vorzugsweise derart, dass der Bodenbereich 31 des Reflektors 3 an das optische Element 4 angrenzt, insbesondere unmittelbar angrenzt.

Vorzugsweise ist die reflektierende Fläche des Reflektors 3 ringförmig geschlossen und insbesondere lichtundurchlässig gestaltet.

Das optische Element 4 weist vorzugsweise einen ringförmigen Rand 41 auf, wobei sich der Reflektor 3 mit seinem Bodenbereich 31 allseits bis unmittelbar zu diesem Rand 41 des optischen Elements 4 hin erstreckt.

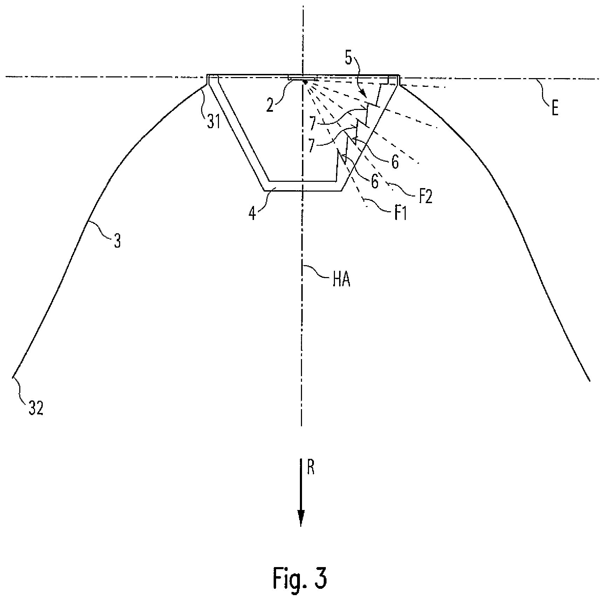

Fig. 3 zeigt eine vergrößerte und etwas ausführlichere Skizze des in Fig. 2 gezeigten Ausführungsbeispiels. Das optische Element 4 erstreckt sich vorzugsweise bis zu einer Ebene *E,* die normal zu der Hauptabstrahlrichtung *R* orientiert ist und dabei eine lichtabgebende Fläche der LED-Lichtquelle 2 durchsetzt. Besonders bevorzugt erstreckt sich das optische Element 4 allseits bis zu dieser Ebene *E* hin. Beispielsweise kann vorgesehen sein, dass sich der Rand 41 des optischen Elements 4 ringförmig bis zu dieser Ebene *E* hin erstreckt bzw. diese Ebene *E* schneidet.

Vorzugsweise ist durch die LED-Lichtquelle 2 eine optische Hauptachse *HA* festgelegt, die beispielsweise einen Mittelpunkt einer lichtabgebenden Fläche bzw. gegebenenfalls der lichtabgebenden Flächen der LED-Lichtquelle 2 durchsetzt und parallel zu der Hauptabstrahlrichtung *R* orientiert ist. Das optische Element 4 ist vorzugsweise so geformt, dass es sich Hauben- bzw. becherförmig um diese Hauptachse *HA* herum erstreckt, insbesondere mit einer geschlossenen Oberfläche. Beispielsweise kann das optische Element 4 mit Bezug auf die Hauptachse *HA* rotationssymmetrisch geformt sein. Das optische Element 4 kann aber alternativ auch so gestaltet sein, dass es in einem Schnitt normal zu der Hauptachse *HA* rechteckförmig ist.

Auch der Reflektor 3 ist vorzugsweise so gestaltet, dass er sich um die Hauptachse *HA* herum erstreckt, beispielsweise rotationssymmetrisch bzw. entsprechend dem optischen Element 4 rechteckförmig. Insbesondere kann vorgesehen sein, dass sich der Reflektor 3 bis zu der Ebene *E* hin erstreckt und Letztere vorzugsweise ringförmig durchsetzt oder berührt.

Wie in Fig. 2 angedeutet, kann das optische Element 4 vorteilhaft einen Oberflächenbereich mit optischen Strukturen 5 aufweisen. Durch die optischen Strukturen 5 lässt sich erzielen, dass die LED-Lichtquelle 2 bei Betrachtung des optischen Elements 4 entgegen der Hauptabstrahlrichtung *R* nicht mehr als solche erkennbar ist, also insbesondere ein entsprechender Lichtpunkt einer LED bzw. Lichtpunkte von LEDs der LED-Lichtquelle 2 "aufgelöst" erscheinen. Insbesondere lässt sich so erzielen, dass eine lichtabgebende Fläche der LED-Lichtquelle 2 nicht mehr als solche lokalisierbar ist.

Die optischen Strukturen 5 können beispielsweise lineare Strukturen sein, beispielsweise im Querschnitt dreieckförmig. Die Strukturen 5 können - wie in Fig. 2 angedeutet - Prismen-artige Strukturen sein, es können unregelmäßige oder chaotische Strukturen sein. Besonders geeignet sind die Strukturen 5 durch lineare Strukturen gebildet, die beispielsweise im Querschnitt dreieckförmig gestaltet sein können. Die Strukturen 5 können auch Zylinderlinsen bzw. gekreuzte Zylinderlinsen umfassen. Letztere eignen sich besonders dazu, die Lichtpunkte der LED-Lichtquelle 2 miteinander verschwimmend erscheinen zu lassen.

Durch die Strukturen 5 lässt sich weiterhin erzielen, dass die Rückreflexionsrate - im Vergleich zum eingangs erwähnten Stand der Technik, bei dem eine Diffusor-Scheibe verwendet wird - besonders reduziert ist und auf diese Weise die Effizienz der Anordnung weitergehend verbessert ist.

Der Oberflächenbereich mit den optischen Strukturen 5 kann, wie in den Figuren 2 bzw. 3 angedeutet, einen, der LED-Lichtquelle 2 zugewandten Oberflächenbereich des optischen Elements 4 umfassen. Alternativ oder ergänzend kann dieser Oberflächenbereich auch einen, der LED-Lichtquelle 2 abgewandten Oberflächenbereich des optischen Elements 4 umfassen. Im letztgenannten Fall kann beispielsweise vorgesehen sein, dass die Strukturen 5 lineare Strukturen umfassen, die auf dem, der LED-Lichtquelle 2 zugewandten Oberflächenbereich längs einer anderen Richtung ausgestaltet gebildet sind als auf dem, der LED-Lichtquelle 2 abgewandten Oberflächenbereich des optischen Elements 4. Insbesondere können diese beiden linearen Strukturen quer zueinander verlaufend gestaltet sein. Durch diese Gestaltung lässt sich erzielen, dass das Licht in zwei unterschiedliche Richtungen gestreut wird; auf diese Weise lässt sich besonders vorteilhaft bewirken, dass die durch die LED-Lichtquelle 2 gebildeten Lichtpunkte bei Betrachtung des optischen Elements 4 entgegen der Hauptabstrahlrichtung *R* miteinander verschwimmen und somit eine lichtabgebende Fläche der LED-Lichtquelle 2 nicht mehr als solche lokalisierbar ist.

Wie im gezeigten Beispiel der Fall, ist die Gestaltung vorzugsweise derart, dass durch das durch das optische Element 4 derjenige Anteil des Lichts, der auf den Reflektor 3 trifft, vergrößert ist. Dabei kann sogar bewirkt werden, dass das Licht vollständig auf den Reflektor 3 auftrifft.

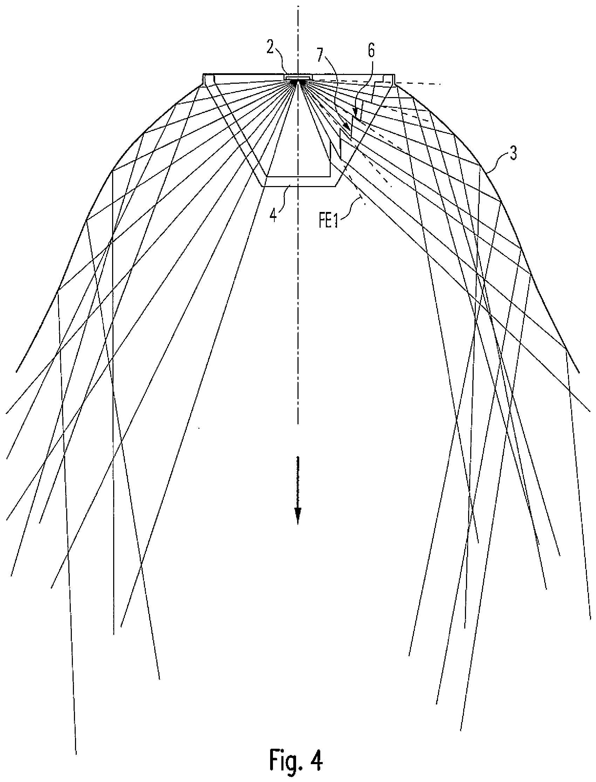

Dies ist beispielhaft in Fig. 4 anhand exemplarischer Lichtstrahlen gezeigt, und zwar - mit Bezug auf die Skizze der Fig. 4 - auf der rechten Seite der LED-Lichtquelle 2 für den Fall entsprechender, auf der Innenseite des optischen Elements 4 ausgebildeter Strukturen 5 und auf der linken Seite - zum Vergleich - für den Fall, dass das optische Element 4 keine entsprechenden Strukturen aufweist.

Wie die Lichtstrahlen zeigen, wirken die Strukturen 5 so, dass mehr Lichtstrahlen auf den Reflektor 3 treffen, also ein größerer Anteil des Lichts auf den Reflektor 3 auftrifft. Hierdurch lässt sich erzielen, dass die Wirkung des Reflektors 3 intensiviert werden kann. Im Vergleich hierzu wird bei einem entsprechend unstrukturierten optischen Element 4 - wie links in Fig. 4 skizziert - ein größerer Anteil des von der LED-Lichtquelle 2 abgestrahlten Lichts unmittelbar über die Öffnung 32 des Reflektors 3 nach außen abgegeben, also ohne vorherige Reflexion an dem Reflektor 3.

Hierzu können die Strukturen 5 vorteilhaft Flankenflächen 6 - insbesondere auf dem, der LED-Lichtquelle 2 zugewandten Oberflächenbereich - aufweisen, die auch als "Störflanken" bezeichnet werden können und die derart gestaltet sind, dass sie möglichst wenig unerwünschtes Streulicht generieren. Hierzu können vorzugsweise die Störflanken 6 sich jeweils in einer Flanken-Ebene *F1, F2* erstrecken, die die LED-Lichtquelle 2 durchsetzt bzw. den Schnittpunkt der Hauptachse *HA* mit der Ebene E durchsetzt. Durch diese Ausgestaltung der Störflanken 6 lässt sich erzielen, dass auf Letzteren besonders wenig von dem Licht, das von der LED-Lichtquelle 2 abgestrahlt wird, auftrifft.

Alternativ können die Störflanken 6 so gestaltet sein, dass sie sich jeweils längs einer Oberfläche eines Kegels erstrecken, dessen Spitze die LED-Lichtquelle 2 durchsetzt. Hierdurch lässt sich derselbe Effekt erzielen.

Eine Ausbildung der Störflanken 6 längs der Flanken-Ebenen *F1, F2* eignet sich dabei besonders, wenn das optische Element 4 und die reflektierende Fläche des Reflektors 3 in einem Schnitt normal zu der Hauptachse *HA* rechteckförmig gestaltet sind, eine entsprechende Ausbildung längs Kegelflächen hingegen, wenn das optische Element 4 und die reflektierende Fläche des Reflektors 3 in einem Schnitt normal zu der Hauptachse *HA* kreisförmig gestaltet sind.

Zwischen den Störflanken 6 können "Wirkflanken" 7 gebildet sein, die derart orientiert ausgebildet sein können, dass sie das auf sie treffende Licht auf die reflektierende Fläche des Reflektors 3 lenken. Insbesondere lässt sich durch Gestaltung der Formen und Ausrichtungen der Wirkflanken 7 bestimmen, welcher Anteil des Lichts auf den Reflektor 3 gelenkt wird und welcher Anteil des Lichts an dem Reflektor 3 vorbei - also direkt durch die Öffnung 32 des Reflektors 3 hindurch - gelenkt wird. Auf diese Weise kann eine Lichtverteilungskurve, die die Lichtabgabe der Anordnung winkelabhängig charakterisiert, beeinflusst werden und somit Einfluss auf die lichttechnischen Eigenschaften der Anordnung, wie insbesondere Blendungsverhalten, erreichbare Beleuchtungsstärke etc. genommen werden.

Wie im gezeigten Beispiel der Fall, kann das optische Element 4 vorteilhaft so geformt sein, dass es in einem Querschnitt betrachtet, insbesondere in einem Querschnitt entlang der Hauptachse *HA,* in erster Näherung eine Trapezform festlegt, wobei die Störflanken 6 und die Wirkflanken 7 an den beiden Schenkeln des Trapezes ausgebildet sind.

Das optische Element 4 muss jedoch nicht - wie gezeigt - in erster Näherung kegelstumpfförmig gestaltet sein. Es kann beispielsweise auch die Form einer spitz zulaufenden Pyramide aufweisen oder bombiert geformt sein. In jedem Fall sind dadurch, dass sich das optische Element 4 in die Hauptabstrahlrichtung *R* vorwölbt, bessere Möglichkeiten gegeben, die Lichtabgabe in gewünschter Weise zu beeinflussen.

Vorzugsweise sind die Strukturen 5 derart ausgelegt, dass sie eine geeignete Herstellungsmethode für das optische Element 4 ermöglichen (beispielsweise entformbar, extrudierbar etc.).

Wenn der Reflektor 3 bzw. dessen reflektierende Fläche einen (in den Figuren nicht gezeigten) reflektierenden, strukturierten Oberflächenbereich zur Beeinflussung des Lichts aufweist, lässt sich das Licht besonders gezielt weitergehend lenken und so insbesondere die Lichtverteilungskurve weitergehend beeinflussen. Die lichttechnische Qualität der Anordnung lässt sich hierdurch weiter steigern. Der strukturierte Oberflächenbereich des Reflektors 3 kann beispielsweise zylindrische und/oder sphärische und/oder facettenartige Strukturen umfassen.

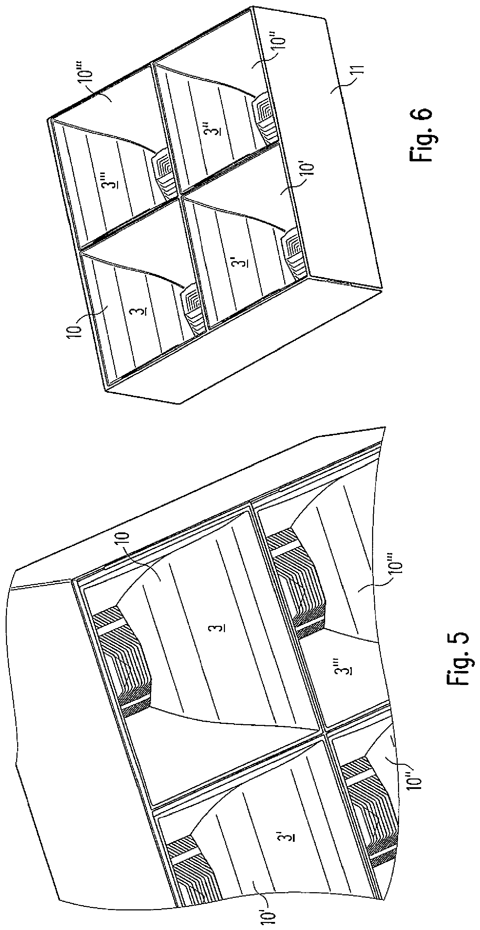

Wie in den Figuren 5 und 6 perspektivisch angedeutet, kann weiterhin ein System zur Lichtabgabe vorgesehen sein, das eine entsprechende Anordnung zur Lichtabgabe 10 sowie wenigstens eine weitere entsprechende Anordnung zur Lichtabgabe 10', 10", 10"' aufweist, wobei der Reflektor 3 der zuerst genannten Anordnung zur Lichtabgabe 10 und der entsprechende wenigstens eine weitere Reflektor 3', 3", 3"' der wenigstens einen weiteren Anordnung zur Lichtabgabe 10', 10", 10'" zusammenhängend, insbesondere einstückig ausgestaltet sind. Vorzugsweise weist das System weiterhin ein Gehäuse 11 auf, das die Anordnungen 10, 10', 10", 10'" schützend umgibt.

Im gezeigten Beispiel sind die Anordnungen 10, 10', 10", 10"'des Systems jeweils baugleich ausgeführt. Wie aus der perspektivischen Darstellung hervorgeht, weisen dabei bei den Anordnungen sowohl das optische Element 4, als auch der Reflektor 3 in einem Schnitt normal zu der Hauptachse *HA* betrachtet einen rechteckigen Querschnitt auf.

Wie beim eingangs erwähnten Stand der Technik als solches der Fall, kann auch dieses System als Rastertopf-Array gestaltet sein.

Das System eignet sich nicht nur - wie in den Figuren 5 und 6 angedeutet, zur Bildung eines "flächigen" bzw. matrixförmigen Zellerasters, sondern auch zur Bildung entsprechend linear gestalteter Systeme. Allgemeiner kann das System beispielsweise rotationssymmetrisch oder linear oder quadratisch oder rechteckig oder vieleckig geformt sein.

Mit einer erfindungsgemäßen Anordnung bzw. einem erfindungsgemäßen System zur Lichtabgabe lassen sich insbesondere im Vergleich zum eingangs erwähnten Stand der Technik Absorptionsverluste reduzieren. Der Wirkungsgrad lässt sich durch das "erhabene", in Hauptabstrahlrichtung *R* vorgewölbte optische Element 4 erhöhen. Dabei lassen sich Vorteile von konventionellen Rasteroptiken, wie sehr gute Entblendung, verminderter Einblickwinkel direkt in die Lichtquelle, Darklight Raster etc. erhalten.

## Patentansprüche

1. Anordnung zur Lichtabgabe, aufweisend
- eine LED-Lichtquelle (2) zur Erzeugung eines Lichts und Abstrahlung des Lichts in eine Hauptabstrahlrichtung (*R*)*,*
- einen Reflektor (3) zur optischen Beeinflussung des Lichts,
- ein optisches Element (4) zur optischen Beeinflussung des Lichts, wobei das optische Element (4) zwischen der LED-Lichtquelle (2) einerseits und dem Reflektor (3) andererseits wirkend angeordnet ist,
wobei das optische Element (4) sich in die Hauptabstrahlrichtung (*R*) vorwölbend gestaltet ist und dabei aus einem lichtdurchlässigen Material besteht, wobei das optische Element (4) einen Oberflächenbereich mit optischen Strukturen (5) aufweist,
**dadurch gekennzeichnet,**
**dass** die Strukturen (5) Flankenflächen (6) aufweisen,
die sich jeweils in einer Flanken-Ebene (*F1, F2*) erstrecken, die die LED-Lichtquelle (2) durchsetzt oder
die sich jeweils längs einer Oberfläche eines Kegels erstrecken, dessen Spitze die LED-Lichtquelle (2) durchsetzt.

2. Anordnung nach Anspruch 1,
bei der das optische Element (4) aus einem klaren Material besteht, beispielsweise aus PMMA oder PC.

3. Anordnung nach Anspruch 1 oder 2,
bei der sich das optische Element (4), insbesondere allseits, bis zu einer Ebene (*E*) hin erstreckt, die normal zu der Hauptabstrahlrichtung (*R*) orientiert ist und dabei eine lichtabgebende Fläche der LED-Lichtquelle (2) durchsetzt.

4. Anordnung nach einem der vorhergehenden Ansprüche,
bei der der Reflektor (3) eine reflektierende Fläche aufweist, die sich zwischen einer Öffnung (32) des Reflektors (3) einerseits und einem Bodenbereich (31) des Reflektors (3) andererseits konvergierend erstreckend gestaltet ist, wobei der Bodenbereich (31) des Reflektors (3) an das optische Element (4) angrenzt.

5. Anordnung nach einem der vorhergehenden Ansprüche,
wobei es sich bei den Strukturen (5) um lineare Strukturen und/oder um Prismen-artige Strukturen und/oder um unregelmäßige und/oder um chaotische Strukturen handelt.

6. Anordnung nach einem der vorhergehenden Ansprüche,
wobei der Oberflächenbereich mit den optischen Strukturen (5) einen, der LED-Lichtquelle (2) zugewandten Oberflächenbereich des optischen Elements (4) umfasst und/oder einen, der LED-Lichtquelle (2) abgewandten Oberflächenbereich des optischen Elements (4) umfasst.

7. Anordnung nach Anspruch 6,
bei der die Strukturen (5) lineare Strukturen umfassen, die auf dem, der LED-Lichtquelle (2) zugewandten Oberflächenbereich längs einer anderen Richtung ausgestaltet gebildet sind als auf dem, der LED-Lichtquelle (2) abgewandten Oberflächenbereich des optischen Elements (4).

8. Anordnung nach einem der vorhergehenden Ansprüche,
bei der die Strukturen (5) derart gestaltet sind, dass bei Betrachtung des optischen Elements (4) entgegen der Hauptabstrahlrichtung (R) eine lichtabgebende Fläche der LED-Lichtquelle (2) nicht mehr als solche lokalisierbar ist.

9. Anordnung nach einem der vorhergehenden Ansprüche,
bei der das optische Element (4) so geformt ist, dass es in einem Querschnitt betrachtet in erster Näherung eine Trapezform festlegt, wobei die Flankenflächen (6) an den beiden Schenkeln der Trapezform ausgebildet sind.

10. Anordnung nach einem der vorhergehenden Ansprüche,
die derart gestaltet ist, dass durch das optische Element (4) derjenige Anteil des Lichts, der auf den Reflektor (3) auftrifft, vergrößert ist.

11. Anordnung nach einem der vorhergehenden Ansprüche,
bei der der Reflektor (3) einen reflektierenden, strukturierten Oberflächenbereich zur Beeinflussung des Lichts aufweist.

12. System zur Lichtabgabe, aufweisend
- eine Anordnung zur Lichtabgabe (10) nach einem der vorhergehenden Ansprüche und
- wenigstens eine weitere Anordnung zur Lichtabgabe (10', 10", 10'") nach einem der vorhergehenden Ansprüche,
wobei der Reflektor (3) der zuerst genannten Anordnung zur Lichtabgabe (10) und der entsprechende wenigstens eine weitere Reflektor (3', 3", 3'") der wenigstens einen weiteren Anordnung zur Lichtabgabe (10', 10", 10'") zusammenhängend, insbesondere einstückig ausgestaltet sind.

## Claims

1. An arrangement for light output, having
- an LED light source (2) for generating a light and radiating the light in a main radiating direction *(R)*,
- a reflector (3) for optically influencing the light,
- an optical element (4) for optically influencing the light,
wherein the optical element (4) is operatively arranged between the LED light source (2) on one side and the reflector (3) on the other side,
wherein the optical element (4) is formed arching forwardly in the main radiating direction *(R)* and consists of a transparent material, wherein the optical element (4) has a surface region with optical structures (5),
**characterized in that**
the structures (5) have flank surfaces (6),
each of which extends in a flank plane *(F1, F2)* which penetrates the LED
light source (2) or
which extends along a surface of a cone, the point of which penetrates the LED light source (2).

2. Arrangement according to claim 1,
in which the optical element (4) consists of a clear material, for example, PMMA or PC.

3. Arrangement according to claim 1 or 2,
in which the optical element (4) extends, in particular on all sides, as far as a plane (*E*) which is oriented normal to the main radiating direction (*R*) and thereby penetrates a light-emitting surface of the LED light source (2).

4. Arrangement according to any of the preceding claims,
wherein the reflector (3) has a reflective surface which is configured extending, firstly, between an opening (32) of the reflector (3) and a base region (31) of the reflector (3) and, secondly, converging, wherein the base region (31) of the reflector (3) adjoins the optical element (4).

5. Arrangement according to any of the preceding claims,
wherein the structures (5) are linear structures and/or prism-like structures and/or irregular and/or chaotic structures.

6. Arrangement according to any of the preceding claims,
wherein the surface region with the optical structures (5) comprises a surface region of the optical element (4) facing the LED light source (2) and/or a surface region of the optical element (4) facing away from the LED light source (2).

7. Arrangement according to claim 6,
wherein the structures (5) comprise linear structures, which are formed on the surface region facing toward the LED light source (2) along another direction than on the surface region of the optical element (4) facing away from the LED light source (2).

8. Arrangement according to any of the preceding claims,
in which the structures (5) are designed in such a way that, when the optical element (4) is viewed contrary to the main radiating direction (*R*), a light-emitting surface of the LED light source (2) is no longer able to be localized as such.

9. Arrangement according to any of the preceding claims,
wherein the optical element (4) is formed in such a way that, when it is viewed in a cross-section it defines, to a first approximation, a trapezium shape, wherein the flank surfaces (6) are formed on both limbs of the trapezium shape.

10. Arrangement according to any of the preceding claims,
which is designed in such a way that the portion of the light that is incident upon the reflector (3) is increased by the optical element (4).

11. Arrangement according to any of the preceding claims,
wherein the reflector (3) has a reflective, structured surface region for influencing the light.

12. A system for light output, having
- an arrangement for light output (10) according to any of the preceding claims, and
- at least one further arrangement for light output (10', 10", 10"') according to any of the preceding claims,
wherein the reflector (3) of the first mentioned arrangement for light output (10) and the corresponding at least one further reflector (3', 3" , 3"') of the at least one further arrangement for light output (10', 10", 10"') are configured connected, in particular, integrally formed as a single piece.

## Revendications

1. Ensemble d'émission de lumière, comprenant
- une source lumineuse à LED (2) servant à produire de la lumière et à la rayonner dans une direction de rayonnement principal *(R)*,
- un réflecteur (3) servant à influer optiquement sur la lumière,
- un élément optique (4) servant à influer optiquement sur la lumière, l'élément optique (4) étant disposé de manière à agir entre la source lumineuse à LED (2) d'une part et le réflecteur (3) d'autre part,
l'élément optique (4) étant conçu bombé vers l'avant dans la direction de rayonnement principal (*R*) et étant constitué d'un matériau laissant passer la lumière, l'élément optique (4) présentant une zone de surface comprenant des structures optiques (5),
**caractérisé en ce que**
les structures (5) présentent des surfaces de flanc (6) qui s'étendent respectivement dans un plan de flanc *(F1, F2)* qui traverse la
source lumineuse à LED (2) ou
qui s'étendent respectivement le long d'une surface d'un cône dont le sommet traverse la source lumineuse à LED (2).

2. Ensemble selon la revendication 1,
dans lequel l'élément optique (4) se compose d'un matériau translucide, par exemple de PMMA ou de PC.

3. Ensemble selon la revendication 1 ou 2,
dans lequel l'élément optique (4) s'étend, notamment de tous les côtés, jusqu'à un plan (*E*) normal à la direction de rayonnement principal (*R*) et traverse ainsi une surface d'émission de lumière de la source lumineuse à LED (2).

4. Ensemble selon l'une des revendications précédentes,
dans lequel le réflecteur (3) présente une surface réfléchissante conçue pour s'étendre de manière convergente entre une ouverture (32) du réflecteur (3) d'une part et une zone de fond (31) du réflecteur (3) d'autre part, la zone de fond (31) du réflecteur (3) étant adjacente à l'élément optique (4).

5. Ensemble selon l'une des revendications précédentes,
dans lequel les structures (5) sont des structures linéaires et/ou des structures de type prismes et/ou des structures irrégulières et/ou chaotiques.

6. Ensemble selon l'une des revendications précédentes,
dans lequel la zone de surface comprenant les structures optiques (5) comporte une zone de surface de l'élément optique (4) qui est tournée vers la source lumineuse à LED (2) et/ou une zone de surface de l'élément optique (4) qui est détournée de la source lumineuse à LED (2).

7. Ensemble selon la revendication 6,
dans lequel les structures (5) comprennent des structures linéaires qui sont formées sur la zone de surface tournée vers la source lumineuse à LED (2) le long d'une direction différente de celles formées sur la zone de surface de l'élément optique (4) détournée de la source lumineuse à LED (2).

8. Ensemble selon l'une des revendications précédentes,
dans lequel les structures (5) sont conçues de sorte qu'en observant l'élément optique (4) à l'encontre de la direction de rayonnement principal (*R*), une surface d'émission de lumière de la source lumineuse à LED (2) ne puisse plus être localisée en tant que telle.

9. Ensemble selon l'une des revendications précédentes,
dans lequel l'élément optique (4), observé en section transversale, est formé de manière à définir, en première approximation, une forme de trapèze, les surfaces de flanc (6) étant conçues au niveau des deux côtés latéraux de la forme de trapèze.

10. Ensemble selon l'une des revendications précédentes,
conçu de telle manière que l'élément optique (4) accroisse la portion de lumière qui est incidente sur le réflecteur (3).

11. Ensemble selon l'une des revendications précédentes,
dans lequel le réflecteur (3) présente une zone de surface structurée et réfléchissante permettant d'influer sur la lumière.

12. Système d'émission de lumière, comprenant
- un ensemble d'émission de lumière (10) selon l'une des revendications précédentes, et
- au moins un autre ensemble d'émission de lumière (10', 10", 10"') selon l'une des revendications précédentes ;
le réflecteur (3) de l'ensemble d'émission de lumière (10) mentionné en premier lieu et l'au moins un autre réflecteur (3', 3", 3"') correspondant de l'au moins un autre ensemble d'émission de lumière (10', 10", 10"') étant conçus de manière continue, en particulier d'un seul tenant.
